# EUROPÄISCHE PATENTANMELDUNG

(11) **EP 4 663 485 A1**
(43) Veröffentlichungstag der Anmeldung: **17.12.2025**
(21) Anmeldenummer: 25177830.4
(22) Anmeldetag: 21.05.2025
(51) Int. Cl.: B60R 16/02, H02G 3/22

(54) **KABELTÜLLE ZUR DURCHFÜHRUNG EINES ELEKTRISCHEN VERBINDUNGSKABELS DURCH EINE KAROSSERIEÖFFNUNG EINES FAHRZEUGS UND FAHRZEUG MIT KABELTÜLLE**

(30) Priorität: 10.06.2024 DE 102024116083; 10.03.2025 DE 102025108885
(71) Anmelder: Linde Material Handling GmbH, 63743 Aschaffenburg (DE)
(72) Erfinder: Cajan, Boris, 64285 Darmstadt (DE)
(74) Vertreter: Patentship Patentanwaltgesellschaft

(57) **Zusammenfassung**

Die Erfindung betrifft eine Kabeltülle (1) zur Durchführung eines elektrischen Verbindungskabels (2) durch eine Karosserieöffnung (3) eines Fahrzeugs, insbesondere einer mobilen Arbeitsmaschine, wobei die Kabeltülle (1) einen Befestigungsabschnitt (5) zum Abdecken, insbesondere wasserabweisenden Abdecken, der als Kabeldurchführung dienenden, einen Nassbereich (10) und einem Trockenbereich (11) des Fahrzeugs miteinander verbindenden Karosserieöffnung (3) aufweist. Die Kabeltülle (1) weist einen von dem Befestigungsabschnitt (5) ausgehenden Wannenabschnitt (7) auf, wobei sich ein Führungskanal (12) zum Hindurchführen des Verbindungskabels (2) durch den Befestigungsabschnitt (5) und den Wannenabschnitt (7) erstreckt, wobei im montierten Zustand der Kabeltülle (1) der Wannenabschnitt (7) im Trockenbereich (11) des Fahrzeugs angeordnet ist.

## Beschreibung

Die Erfindung betrifft eine Kabeltülle zur Durchführung eines elektrischen Verbindungskabels durch eine Karosserieöffnung eines Fahrzeugs, insbesondere einer mobilen Arbeitsmaschine, wobei die Kabeltülle einen Befestigungsabschnitt zum Abdecken, insbesondere wasserabweisenden Abdecken, der als Kabeldurchführung dienenden, einen Nassbereich und einem Trockenbereich des Fahrzeugs miteinander verbindenden Karosserieöffnung aufweist.

Die Erfindung betrifft weiterhin ein Fahrzeug, insbesondere eine mobile Arbeitsmaschine, beispielsweise ein Flurförderzeug, mit einer entsprechenden Kabeltülle.

Derartige Kabeltüllen werden eingesetzt, um ein oder mehrere elektrischen Verbindungskabel an dem Fahrzeug durch die Karosserieöffnung von einem Trockenbereich des Fahrzeugs, beispielsweise einem Innenraum einer Fahrerkabine, zu einem Nassbereich, beispielsweise der Umgebung an der Fahrzeugaußenseite, zu führen. Mit der Kabeltülle soll dabei das Eindringen von Wasser vom Nassbereich in den Trockenbereich möglichst verhindert werden.

Insbesondere beim Anbau elektrischer Ausstattungsoptionen, beispielsweise Arbeitsscheinwerfern und/oder Fahrbeleuchtung an dem Fahrzeug, ist es notwendig, dass die dazugehörigen elektrischen Verbindungkabel mittels entsprechender Kabeltüllen aus dem Innenraum der Fahrerkabine nach außen zur Fahrzeugaußenseite geführt werden.

Hierzu sind Kabeltüllen bekannt, die im montierten Zustand an dem Nassbereich mit einer eine Öffnung aufweisenden Abdeckung, die in den Nassbereich hineinragt, ausgeführt sind, wobei das Verbindungskabel durch die Öffnung der Abdeckung aus der Kabeltülle herausgeführt ist. Um das Eindringen von Wasser, beispielsweise Regenwasser, in den Trockenbereich zu vermeiden, wird die Kabeltülle so montiert, dass die Öffnung der Abdeckung nach vertikal unten weist. Um zu vermeiden, dass Wasser entlang des Verbindungskabels in den Trockenbereich hinein läuft, wird zusätzlich oder alternativ das Verbindungskabel aus der Abdeckung an der Öffnung nach vertikal unten in den Nassbereich herausgeführt und unter Ausbildung eines Bogens bzw. einer Schlaufe nach vertikal oben weiterführt.

Derartige Kabeltüllen weisen aufgrund der am Nassbereich ausgebildeten und in den Nassbereich hineinragenden Abdeckung im Nassbereich einen erhöhten Bauraumbedarf auf und verursachen durch die aufwändige Kabelführung und Kabelverlegung des Verbindungskabels am Nassbereich durch die Ausbildung eines Bogens bzw. einer Schlaufe eine hohen Montageaufwand und Platzbedarf für das Verbindungskabel auf. Zudem kann bei einer unsachgemäßen Montage, beispielsweise einer Montage der Kabeltülle, bei der Öffnung der Abdeckung der Kabeltülle seitlich verweist und/oder das Verbindungskabel aus der Öffnung nach vertikal oben herausgeführt wird, Wasser entlang des elektrischen Verbindungskabels durch die Kabeltülle vom Nassbereich in den Trockenbereich gelangen.

Eine gattungsgemäße Kabeltülle mit einem nach vertikal unten verlaufenden Schutzschlauch im Nassbereich ist aus der WO 2024/083818 A1 bekannt.

Der vorliegenden Erfindung liegt die Aufgabe zugrunde, eine gattungsgemäße Kabeltülle zur Verfügung zu stellen, die hinsichtlich der genannten Nachteile verbessert ist.

Diese Aufgabe wird erfindungsgemäß dadurch gelöst, dass die Kabeltülle einen von dem Befestigungsabschnitt ausgehenden Wannenabschnitt aufweist, wobei sich ein Führungskanal zum Hindurchführen des Verbindungskabels durch den Befestigungsabschnitt und den Wannenabschnitt erstreckt, wobei im montierten Zustand der Kabeltülle der Wannenabschnitt im Trockenbereich des Fahrzeugs angeordnet ist.

Die erfindungsgemäße Kabeltülle ist somit im Trockenbereich mit einem Wannenabschnitt versehen, der einen Teil des Führungskanals bildet, durch den das Verbindungskabel vom Trockenbereich in den Nassbereich verlegt ist. Der Wannenabschnitt stellt ein Wassersammelbecken dar, das an dem Befestigungsabschnitt eindringendes Wasser und/oder entlang des Verbindungskabels entlang laufendes Wasser aufsammelt und dieses wieder an dem Befestigungsabschnitt zum Nassbereich abführt. Dadurch kann das Endringen von Wasser aus dem Nassbereich in den Trockenbereich wirksam vermieden werden. Die erfindungsgemäße Kabeltülle benötigt keine in den Nassbereich hineinragende Abdeckung und weist somit im Nassbereich eine geringen Bauraumbedarf auf. Zudem kann das Verbindungskabel an dem Befestigungsabschnitt in beliebiger Richtung aus der Kabeltülle herausgeführt werden, beispielsweise nach vertikal oben herausgeführt werden, da entlang des Verbindungskabels laufendes Wasser von dem Wannenabschnitt aufgesammelt wird und zum Nassbereich abgeführt wird, so dass die erfindungsgemäße Kabeltülle weiterhin eine geringen Montageaufwand und einen geringen Platzbedarf im Nassbereich für das Verbindungskabel und dessen Verlegung aufweist.

Gemäß einer vorteilhaften Ausgestaltungsform der Erfindung ist der Wannenabschnitt an der Oberseite offen ausgebildet, wobei die Oberseite des Wannenabschnitts eine trockenraumseitige Öffnung des Führungskanals bildet. Im montierten Zustand der Kabeltülle ist somit das Verbindungskabel im Trockenbereich immer nach vertikal oben aus dem Führungskanal herausgeführt, wodurch in einfacher Weise sichergestellt werden kann, dass entlang des Verbindungskabels laufendes Wasser an dem Verbindungskabel abtropft und in dem Wannenabschnitt der Kabeltülle aufgesammelt wird.

Gemäß einer vorteilhaften Ausgestaltungsform der Erfindung ist an dem Befestigungsabschnitt eine nassraumseitige Öffnung des Führungskanals ausgebildet. Hierdurch kann das Verbindungskabel im Nassbereich in einfacher Weise in beliebiger Richtung aus der Kabeltülle herausgeführt werden
Gemäß einer vorteilhaften Ausgestaltungsform der Erfindung ist die nassraumseitige Öffnung des Führungskanals im Wesentlichen senkrecht zur trockenraumseitigen Öffnung des Führungskanals angeordnet. Hierdurch wird erzielt, dass der Führungskanal von der nassraumseitigen Öffnung zur trockenraumseitigen Öffnung in einem Winkelbereich von 90° umgelenkt ist, so dass in einfacher Weise der Wannenabschitt geschaffen werden kann und erzielt wird, dass das Verbindungskabel im Trockenbereich immer nach vertikal oben aus der trockenraumseitigen Öffnung des Führungskanals herausgeführt ist.

Gemäß einer vorteilhaften Ausgestaltungsform der Erfindung ist der Wannenabschnitt ausgehend von der Oberseite des Wannenabschnitts zu einer Unterseite der nassraumseitigen Öffnung des Führungskanals des Befestigungsabschnitts als Wasserablaufrinne ausgebildet, mit einem von der Oberseite des Wannenabschnitts zu der Unterseite der nassraumseitigen Öffnung des Führungskanals der Befestigungsabschnitts ausgebildete Gefälle. Die Oberseite des Wannenabschnitts mit der trockenraumseitigen Öffnung des Führungskanals ist somit in vertikaler Richtung oberhalb der Unterseite der nassraumseitigen Öffnung angeordnet. Mit dem ein Gefälle zur Unterseite der nassraumseitigen Öffnung des Führungskanals aufweisenden, als Wasserablaufrinne ausgebildeten Wannenabschnitt der Kabeltülle kann in einfacher Weise sichergestellt werden, dass sich im Wannenabschnitt sammelndes Wasser über die nassraumseitigen Öffnung zum Nassbereich abfließen kann.

Gemäß einer vorteilhaften Ausgestaltungsform der Erfindung sind die nassraumseitige Öffnung des Führungskanals, die trockenraumseitige Öffnung des Führungskanals und der durch den Befestigungsabschnitt und den Wannenabschnitt sich erstreckende Führungskanal derart ausgebildet, dass im montierten Zustand der Kabeltülle ein mit einem Stecker versehenes elektrisches Verbindungskabel durch die Kabeltülle geschoben werden kann. Hierdurch wird eine einfache Montage und Verlegung des mit einem Stecker versehenen Verbindungskabels in der in der Kabinenöffnung montierten Kabeltülle ermöglicht.

Gemäß einer vorteilhaften Ausgestaltungsform der Erfindung ist der Befestigungsabschnitt an der nassraumseitigen Öffnung des Führungskanals mit mindestens einer die nassraumseitige Öffnung zumindest teilweise abdeckenden flexiblen Abdecklippe versehen. Hierdurch kann in einfacher Weise bei der Montage des Verbindungskabels das Verbindungskabel mit dem Stecker durch die nassraumseitige Öffnung des Führungskanals hindurch geschoben werden, wobei im montierten Zustand des Verbindungskabels mit der flexiblen Abdecklippe eine kleine verbleibende nassraumseitige Öffnung des Führungskanals erzielt wird, so dass die Menge von in den Wannenabschnitt eindringenden Wasser minimiert werden kann.

Gemäß einer vorteilhaften Ausgestaltungsform der Erfindung erstreckt sich die mindestens eine flexible Abdecklippe von einer Oberseite der nassraumseitigen Öffnung des Führungskanals des Befestigungsanschnitts in Richtung zur Unterseite der nassraumseitigen Öffnung des Führungskanals des Befestigungsabschnitts. Hierdurch kann in einfacher Weise insbesondere die flexible Abdecklippe einstückig an der Kabeltülle ausgebildet werden.

Gemäß einer vorteilhaften Ausgestaltungsform der Erfindung ist der Befestigungsabschnitt mit einer umlaufenden Verriegelungsnut versehen, in die im montierten Zustand der Kabeltülle der Rand der Karosserieöffnung eingreift. Hierdurch ist eine einfache, schnelle und werkzeuglose Montage der Kabeltülle in der Karosserieöffnung des Fahrzeugs möglich. Die Verriegelungsnut bildet vorzugsweise im montierten Zustand mit dem Rand der Karosserieöffnung einen Hinterschnitt, so dass ein sicherer Halt der Kabeltülle im montierten Zustand in der Karosserieöffnung erzielt wird.

Gemäß einer vorteilhaften Ausgestaltungsform der Erfindung sind der Befestigungsabschnitt und der Wannenabschnitt einstückig ausgebildet. Dies ermöglicht eine einfache und kostengünstige Herstellung der Kabeltülle, beispielsweise in einem Spritzgußverfahren.

Gemäß einer vorteilhaften Ausgestaltungsform der Erfindung besteht die Kabeltülle aus flexiblem Kunststoff oder aus Gummi, insbesondere Hartgummi. Dies erleichtert die Montage der Kabeltülle in der Kabinenöffnung und ermöglicht in einfacher Weise eine wasserdichte Abdichtung der Karosserieöffnung.

Gemäß einer vorteilhaften Ausgestaltungsform der Erfindung ist der Befestigungsabschnitt mit einer den Befestigungsabschnitt in Umfangsrichtung unterbrechenden schlitzförmigen Ausnehmung versehen. Die schlitzförmige Ausnehmung durchsetzt und unterbricht den Befestigungsabschnitt in Umfangsrichtung. Dies ermöglicht es, das Verbindungskabel über die schlitzförmige Ausnehmung und gegebenenfalls unter Auseinanderbiegen des Befestigungsabschnitts in die Kabeltülle und deren Führungskanal einzulegen, wodurch die Montage des Verbindungskabels in die Kabeltülle vereinfacht werden kann.

Gemäß einer vorteilhaften Ausgestaltungsform der Erfindung ist der Wannenabschnitt von zwei Seitenwänden und einer Rückwand gebildet und ist der Befestigungsabschnitt von einem ersten Seitenwulstabschnitt, einem zweiten Seitenwulstabschnitt, einem unteren Wulstabschnitt und einem oberen Wulstabschnitt gebildet, wobei die erste Seitenwand des Wannenabschnitts in den ersten Seitenwulstabschnitt des Befestigungsabschnitts übergeht, die zweite Seitenwand des Wannenabschnitts in den zweiten Seitenwulstabschnitt des Befestigungsabschnitts übergeht und die Rückwand des Wannenabschnitts in den unteren Wulstabschnitt des Befestigungsabschnitts übergeht, wobei in dem oberen Wulstabschnitt des Befestigungsabschnitts die schlitzförmige Ausnehmung ausgebildet ist, wobei die schlitzförmigen Ausnehmung den oberen Wulstabschnitt unterbricht. Die schlitzförmige Ausnehmung durchsetzt somit den oberen Wulstabschnitt und unterbricht damit den Befestigungsabschnitt in Umfangsrichtung. In dem oberen Wulstabschnitt des Befestigungsabschnitts, in den keine Wand des Wannenabschnitts übergeht, kann hierbei in einfacher Weise die schlitzförmige Ausnehmung ausgebildet werden, die den Befestigungsabschnitt in Umfangsrichtung unterbricht.

Gemäß einer vorteilhaften Ausgestaltungsform der Erfindung ist die schlitzförmige Ausnehmung in dem oberen Wulstabschnitt des Befestigungsabschnitts im Wesentlichen mittig zwischen den beiden Seitenwulstabschnitten des Befestigungsabschnitts angeordnet. Mit einer derartigen, den oberen Wulstabschnitt durchsetzenden und somit durch den oberen Wulstabschnitt durchgehenden schlitzförmige Ausnehmung, die im Wesentlichen mittig zwischen den beiden Seitenwulstabschnitten des Befestigungsabschnitts angeordnet ist, kann auf einfache Weise eine Öffnung im Umfang des Befestigungsabschnittes gebildet werden, durch die das Verbindungskabel in einfacher Weise in die Kabeltülle und deren Führungskanal eingelegt werden kann.

Gemäß einer vorteilhaften Ausgestaltungsform der Erfindung ist die Öffnungsweite der schlitzförmigen Ausnehmung derart ausgeführt, dass in einem in der Karosserieöffnung des Fahrzeugs montierten Zustand der Kabeltülle die schlitzförmige Ausnehmung geschlossen ist. Hierdurch wird in einfacher Weise erzielt, dass im montierten Zustand, in dem die Kabeltülle mit dem Befestigungsabschnitt in der Karosserieöffnung des Fahrzeugs montiert ist, die schlitzförmige Ausnehmung in dem Befestigungsabschnitt geschlossen ist, so dass ein Eindringen von Wasser aus dem Nassbereich an der schlitzförmigen Ausnehmung wirksam vermieden wird.

Die Erfindung betrifft weiterhin ein Fahrzeug, insbesondere eine mobile Arbeitsmaschine, mit einer erfindungsgemäßen Kabeltülle zur Durchführung eines elektrischen Verbindungskabels vom Innenraum einer Fahrerkabine zur Fahrzeugaußenseite. Für das Fahrzeug sind die oben genannten vorteilhaften Ausgestaltungsformen der Kabeltülle ebenfalls anwendbar.

Die erfindungsgemäße Kabeltülle weist eine Reihe von Vorteilen auf.

Die erfindungsgemäße Kabeltülle weist einen einfachen und kostengünstigen Aufbau auf und ermöglicht eine einfache und schnelle Montage eines oder mehrere elektrischer Verbindungskabel, wobei mit dem Wannenabschnitt der Eintritt von Wasser aus dem Nassbereich in den Trockenbereich, beispielsweise den Innenraum einer Fahrerkabine des Fahrzeugs, sicher vermieden werden kann.

Die erfindungsgemäße Kabeltülle benötigt zur Verhinderung des Wassereintritts vom Nassbereich in den Trockenbereich keine in den Nassbereich hineinragende Abdeckung und weist somit im Nassbereich einen geringe Bauraumbedarf auf. Zudem kann das Verbindungskabel an dem Befestigungsabschnitt in beliebiger Richtung aus der Kabeltülle herausgeführt werden, beispielsweise nach vertikal oben herausgeführt werden. Dadurch ist eine universelle Verwendung der erfindungsgemäßen Kabeltülle an verschiedenen Karosserieöffnungen möglich, an denen wenig Bauraum im Nassbereich für die Verlegung von Verbindungskabeln vorhanden ist.

Weitere Vorteile und Einzelheiten der Erfindung werden anhand der in den schematischen Figuren dargestellten Ausführungsbeispiele näher erläutert. Hierbei zeigt
- Figur 1: eine perspektivische Darstellung einer ersten Ausführungsform der Kabeltülle,
- Figur 2: die Kabeltülle der Figur 1 in einem im Fahrzeug montierten Zustand in einer Ansicht von dem Nassbereich des Fahrzeugs aus,
- Figur 3: einen Seitenansicht gemäß Pfeil A der Figur 2,
- Figur 4: die Kabeltülle der Figuren 1 bis 3 in einem im Fahrzeug montierten Zustand mit montiertem Verbindungskabel in einer Ansicht von dem Trockenbereich des Fahrzeugs aus,
- Figur 5: die Kabeltülle der Figuren 1 bis 4 in einem im Fahrzeug montierten Zustand mit montiertem Verbindungskabel in einer Ansicht von dem Nassbereich des Fahrzeugs aus,
- Figur 6: eine perspektivische Darstellung einer zweiten Ausführungsform der Kabeltülle und
- Figur 7: eine Gegenüberstellung der beiden Ausführungsformen der Kabeltüllen.

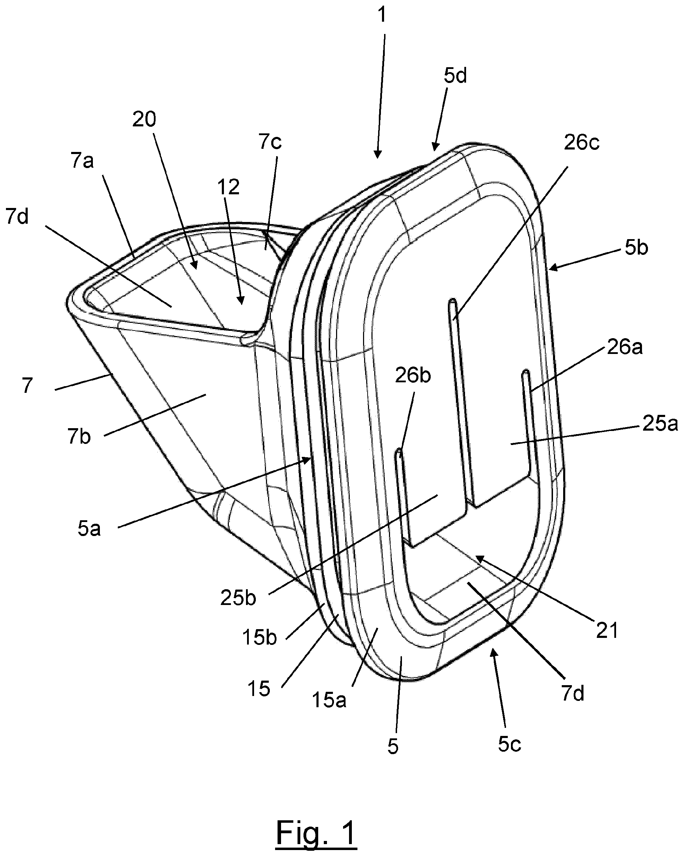

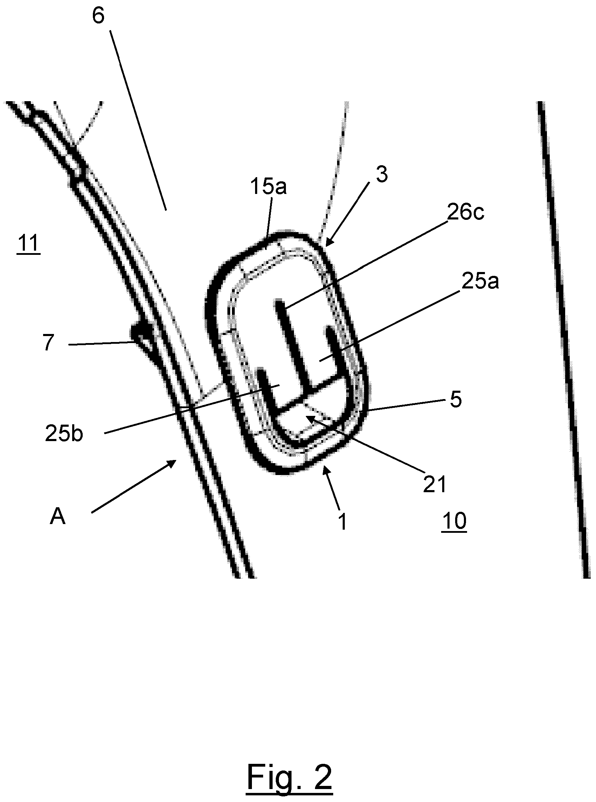

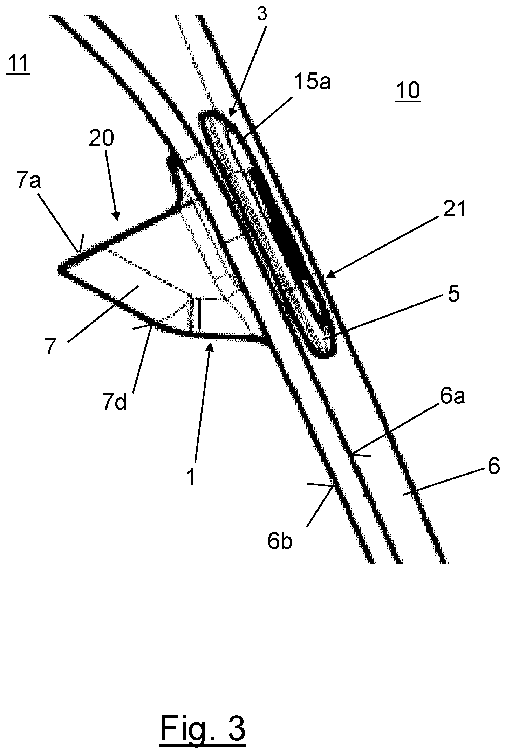

In den Figuren 1 bis 7 ist jeweils eine erfindungsgemäße Kabeltülle 1 dargestellt, die zur Durchführung eines elektrischen Verbindungskabels 2 durch eine Karosserieöffnung 3 eines Fahrzeugs, insbesondere einer als Flurförderzeug ausgebildeten mobilen Arbeitsmaschine dient.

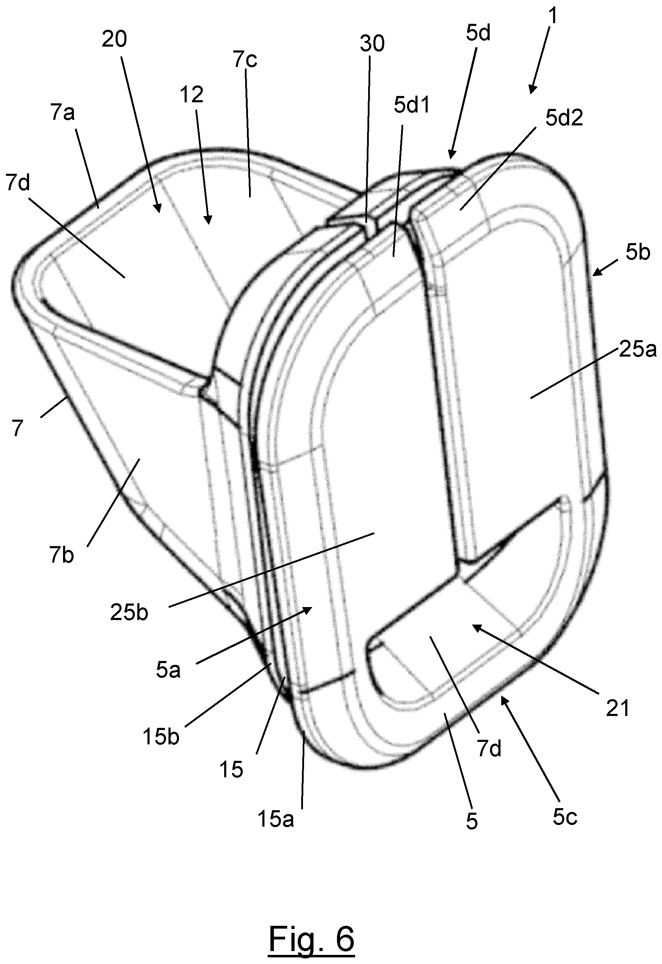

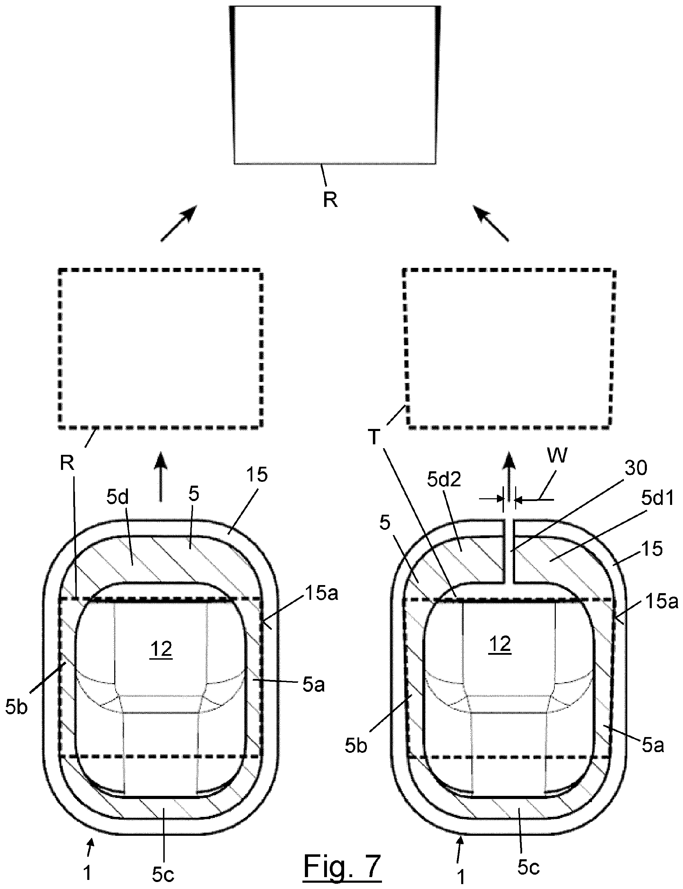

In dem in den Figuren 1 bis 5 dargestellten ersten Ausführungsbeispiel der Kabeltülle 1 und in dem in den Figuren 6 und 7 dargestellten zweiten Ausführungsbeispiel der Kabeltülle 1 sind gleiche Bauteile und Bauelemente mit gleichen Bezugszeichen versehen.

Die Kabeltülle 1 der Figuren 1 bis 7 weist einen Befestigungsabschnitt 5 zum Abdecken, insbesondere wasserabweisenden bzw. wasserdichten Abdecken, der als Kabeldurchführung dienenden, einen Nassbereich 10 und einen Trockenbereich 11 des Fahrzeugs 3 miteinander verbindenden Karosserieöffnung 3 auf. Im dargestellten Ausführungsbeispiel ist die Karosserieöffnung 3 in einer Fahrzeugwand 6 einer Fahrerkabine der mobilen Arbeitsmaschine ausgebildet, wobei der Trockenbereich 11 vom Innenraum der Fahrerkabine gebildet ist und der Nassbereich 10 von der Umgebung des Fahrzeugs gebildet ist.

Der Befestigungsabschnitt 5 ist mit einer umlaufenden Verriegelungsnut 15 versehen, in die im montierten Zustand der Rand der Karosserieöffnung 3 eingreift. Die Verriegelungsnut 15 ist zwischen zwei umlaufenden Wülsten 15a, 15b am Befestigungsabschnitt 5 ausgebildet, wobei die Wulst 15a im montierten Zustand an der dem Nassbereich 10 zugewandten Außenfläche 6a der Fahrzeugwand 6 anliegt und die Wulst 15b im montierten Zustand an der dem Trockenbereich 11 zugewandten Innenfläche 6b der Fahrzeugwand 6 anliegt.

Die Kabeltülle 1 weist einen von dem Befestigungsabschnitt 5 ausgehenden Wannenabschnitt 7 auf, wobei im montierten Zustand der Kabeltülle 1 der Wannenabschnitt 7 im Trockenbereich 11 des Fahrzeugs angeordnet ist.

Ein Führungskanal 12, durch den das Verbindungskabel 2 hindurchführbar ist, erstreckt sich durch den Befestigungsabschnitt 5 und den Wannenabschnitt 7.

Der Wannenabschnitt 7 ist an der Oberseite 7a offen ausgebildet, wobei die Oberseite 7a des Wannenabschnitts 7 eine trockenraumseitige Öffnung 20 des Führungskanals 12 bildet.

An dem Befestigungsabschnitt 5 ist eine nassraumseitige Öffnung 21 des Führungskanals 12 ausgebildet.

Die nassraumseitige Öffnung 21 des Führungskanals 12 ist im Wesentlichen senkrecht zur trockenraumseitigen Öffnung 20 des Führungskanals 12 angeordnet. Als im Wesentlichen senkrecht soll ein Winkelbereich im Bereich zwischen 60° bis 120° eines Winkels zwischen der nassraumseitige Öffnung 21 und der trockenraumseitigen Öffnung 20 des Führungskanals 12 umfasst sein.

Der Befestigungsabschnitt 5 und der Wannenabschnitt 7 sind einstückig ausgebildet.

Der Wannenabschnitt 7 ist von zwei Seitenwänden 7b, 7c und einer Rückwand 7d gebildet, die zueinander einen U-förmigen oder rinnenförmigen Querschnitt des Führungskanals 12 einschließen.

Der Befestigungsabschnitt 5 ist von einem ersten Seitenwulstabschnitt 5a, einem zweiten Seitenwulstabschnitt 5b, einem unteren Wulstabschnitt 5c und einem oberen Wulstabschnitt 5d gebildet ist. Die erste Seitenwand 7b des Wannenabschnitts 7a geht in den ersten Seitenwulstabschnitt 5a des Befestigungsabschnitts 5 über. Die zweite Seitenwand 7c des Wannenabschnitts 7 geht in den zweiten Seitenwulstabschnitt 5b des Befestigungsabschnitts 5 über. Die Rückwand 7d des Wannenabschnitts 7 geht in den unteren Wulstabschnitt 5c des Befestigungsabschnitts 5 über.

Der Wannenabschnitt 7 ist ausgehend von der Oberseite 7a des Wannenabschnitts 7 zu einer Unterseite der nassraumseitigen Öffnung 21 des Führungskanals 12 des Befestigungsabschnitts 5 als Wasserablaufrinne ausgebildet, mit einem von der Oberseite 7a des Wannenabschnitts 7 zu der Unterseite der nassraumseitigen Öffnung 21 des Führungskanals 12 des Befestigungsabschnitts 5 ausgebildete Gefälle.

In den dargestellten Ausführungsbeispielen ist die an der Oberseite 7a des Wannenabschnitts 7 ausgebildete trockenraumseitige Öffnung 20 des Führungskanals 12 im montierten Zustand der Kabeltülle 1 - in vertikaler Richtung gesehen - im vertikal oberen Bereich der nassraumseitigen Öffnung 21 des Führungskanals 12 angeordnet.

In dem Ausführungsbeispiel der Figuren 1 bis 5 sind die nassraumseitige Öffnung 21 des Führungskanals 12, die trockenraumseitige Öffnung 20 des Führungskanals 12 und der durch den Befestigungsabschnitt 5 und den Wannenabschnitt 7 sich erstreckende Führungskanal 12 derart dimensioniert und ausgebildet, dass in einem in der Karosserieöffnung 3 montierten Zustand der Kabeltülle 1 ein mit einem Stecker versehenes elektrisches Verbindungskabel 2 durch die Kabeltülle 1 hindurch geschoben werden kann.

In dem Ausführungsbeispiel der Figuren 1 bis 5 ist der von dem ersten Seitenwulstabschnitt 5a, dem zweiten Seitenwulstabschnitt 5b, dem unteren Wulstabschnitt 5c und dem oberen Wulstabschnitt 5d gebildete Befestigungsabschnitt 5 in Umfangsrichtung geschlossen.

In dem Ausführungsbeispiel der Figuren 6 und 7 ist der Befestigungsabschnitt 5 mit einer den Befestigungsabschnitt 5 in Umfangsrichtung unterbrechenden schlitzförmigen Ausnehmung 30 versehen.

In dem Ausführungsbeispiel der Figuren 6 und 7 ist die schlitzförmige Ausnehmung 30 in dem oberen Wulstabschnitt 5d des Befestigungsabschnitts 5 ausgebildet ist. Die schlitzförmigen Ausnehmung 30 unterbricht den oberen Wulstabschnitt 5d vollständig. Der obere Wulstabschnitt 5d wird somit von der durchgehenden schlitzförmigen Ausnehmung 30 in einen an den ersten Seitenwulstabschnitt 5a angeordneten ersten Abschnitt 5d1 und einen an den zweiten Seitenwulstabschnitt 5b angeordneten zweiten Abschnitt 5d2 unterteilt.

Die schlitzförmige Ausnehmung 30 in dem oberen Wulstabschnitt 5d des Befestigungsabschnitts 5 ist im Wesentlichen mittig zwischen den beiden Seitenwulstabschnitten 5a, 5b des Befestigungsabschnitts 5 angeordnet.

Bei der Kabeltülle 1 der Figur 6 können ein oder mehrere Verbindungskabel 2 über den durchgehenden Schlitz 30 in dem Wulstabschnitt 5d in die Kabeltülle 1 und deren Führungskanal 12 eingelegt werden. Hierbei kann bei der Montage des Verbindungskabels 2 gegebenenfalls die Kabeltülle 1 in einfacher Wiese oben an den beiden Abschnitten 5d1 und 5d2 des Wulstabschnittes 5d auseinandergebogen werden, um die Öffnungsweite der schlitzförmigen Ausnehmung 30 zu vergrößern und das Einlegen eines oder mehrere Verbindungskabel 2 zu erleichtern. Anschließend kann die mit dem Verbindungskabel 2 versehene Kabeltülle 1 in die die Karosserieöffnung 3 des Fahrzeugs 1 montiert werden. Die Öffnungsweite W der schlitzförmigen Ausnehmung 30 ist bevorzugt derart ausgeführt, dass in einem in der Karosserieöffnung 3 des Fahrzeugs montierten Zustand der Kabeltülle 1 die beiden Abschnitte 5d1 und 5d2 des Wulstabschnittes 5d aufeinandergedrückt werden und dadurch die schlitzförmige Ausnehmung 30 geschlossen wird. Im in der Karosserieöffnung 3 des Fahrzeugs montierten Zustand der Kabeltülle 1 kann dadurch ein Eindringen von Wasser an der schlitzförmigen Ausnehmung 30 in einfacher Weise vermieden werden.

Der Befestigungsabschnitt 5 ist in den beiden Ausführungsformen der Kabeltülle 1 an der nassraumseitigen Öffnung 21 des Führungskanals 12 mit mindestens einer die nassraumseitige Öffnung 21 zumindest teilweise abdeckenden flexiblen Abdecklippe 25a, 25b versehen.

Die flexiblen Abdecklippen 25a, 25b erstrecken sich in den dargestellten Ausführungsbeispielen von einer Oberseite der nassraumseitigen Öffnung 21 des Führungskanals 12 und somit von dem oberen Wulstabschnitt 5d des Befestigungsabschnitts 5 in vertikaler Richtung nach unten in Richtung zur Unterseite der nassraumseitigen Öffnung 21 des Führungskanals 12 des Befestigungsabschnitts 5. In den dargestellten Ausführungsbeispielen ist zwischen der Unterkante der flexiblen Abdecklippen 25a, 25b und der Unterseite der nassraumseitigen Öffnung 21 des Führungskanals 12 und somit dem unteren Wulstabschnitt 5c des Befestigungsabschnitts 5 ein Freiraum ausgebildet, der im Wesentlichen dem Durchmesser des Verbindungskabels 2 entspricht.

Die flexiblen Abdecklippen 25a, 25b sind im dargestellten Ausführungsbeispiel der Figuren 1 bis 5 von einer die nassraumseitigen 21 Öffnung des Führungskanals 12 abdeckenden Frontwand der Kabeltülle 1 gebildet, die mit zwei seitlichen Vertikalschlitzen 26a, 26b und einem vertikalen Mittelschlitz 26c versehen ist, wobei die beiden Vertikalschlitze 26a und 26c die flexible Abdecklippe 25a und die beiden Vertikalschlitze 26b und 26c die flexible Abdecklippe 25b bilden.

Die flexiblen Abdecklippen 25a, 25b sind im dargestellten Ausführungsbeispiel der Figur 6 von einer die nassraumseitigen 21 Öffnung des Führungskanals 12 abdeckenden Frontwand der Kabeltülle 1 gebildet. Die schlitzförmige Ausnehmung 30 erstreckt sich über die Frontwand und unterteilt diese in die beiden flexiblen Abdecklippen 25a, 25b bilden.

Die Frontwand und somit die flexiblen Abdecklippen 25a, 25b sind in den dargestellten Ausführungsbeispiel einstückig an dem Befestigungsabschnitt 5 der Kabeltülle 1 ausgebildet.

Die Kabeltülle 1 besteht aus flexiblem Kunststoff oder aus Gummi, beispielsweise Hartgummi.

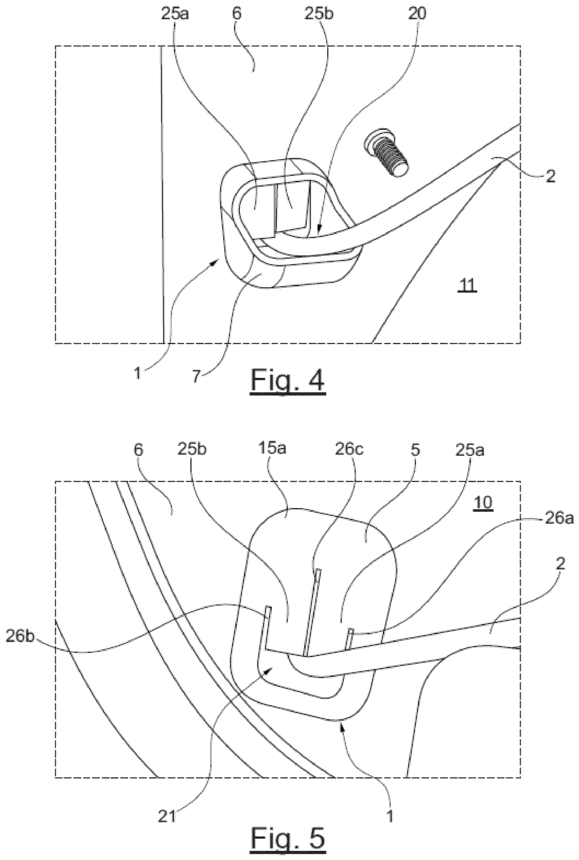

Wie aus den Figuren 4 und 5 ersichtlich ist, ist das Verbindungskabel 2 an der an der Oberseite 7a des Wannenabschnitts 7 ausgebildeten trockenraumseitigen Öffnung 20 nach vertikal oben aus dem von dem Wannenabschnitt 7 gebildeten Führungskanal 12 in den Trockenbereich 11 herausgeführt.

An der an dem Befestigungsabschnitt 5 ausgebildeten nassraumseitigen Öffnung 21 kann das Verbindungskabel 2 in beliebiger Richtung aus dem Führungskanal 12 in den Nassbereich 10 herausgeführt werden. In der Darstellung der Figur 5 ist das Verbindungskabel 2 in seitlicher Richtung und nach vertikal oben weisend aus der nassraumseitigen Öffnung 21 in den Nassbereich 11 herausgeführt.

Sofern in einem in der Karosserieöffnung 3 der Fahrzeugwand 6 des Fahrzeugs montierten Zustand der Kabeltülle 1 Wasser, beispielsweise Regenwasser, aus dem Nassbereich 10 in die nassraumseitige Öffnung 21 der Kabeltülle 1 hineinläuft und eintritt, wird dieses Wasser in dem Wannenabschnitt 7 aufgesammelt und kann wieder an der nassraumseitige Öffnung 21 in den Nassbereich 10 abfließen.

Durch die Lage und Anordnung der trockenraumseitigen Öffnung 20 des Führungskanals 12 an der Oberseite 7a des Wannenabschnitts 7 ist sichergestellt, dass das Verbindungskabel 2 im Trockenbereich 11 nach vertikal oben aus dem Wannenabschnitt 7 herausgeführt wird. Hierdurch wird erzielt, dass an dem Verbindungskabel 2 entlang laufendes Wasser an der untersten Stelle des Verbindungskabels 2 in den Wannenabschnitt 7 abtropft und an der nassraumseitigen Öffnung 21 in den Nassbereich 10 abfließen kann.

Die erfindungsgemäße Kabeltülle 1 verhindert somit in sicherer Weise das Eindringen von Wasser, beispielweise Regenwasser, in den Trockenbereich 11 und ermöglicht eine wasserdichte Durchführung des elektrischen Verbindungskabels 2 durch die Karosserieöffnung 3 von dem Nassbereich 10 in den Trockenbereich 11.

Wie aus den Figuren 1 bis 7 ersichtlich ist, ist die Kabeltülle 1 an dem in den Nassbereich 10 hineinragenden Stirnseite flach und eben ausgeführt, so dass die Kabeltülle 1 - abgesehen von der Wulst 15a - im montierten Zustand nicht in den Nassbereich 10 hineinragt und keinen Bauraum im Nassbereich 10 benötigt.

In der Figur 7 ist in der unteren linken Darstellung ein Querschnitt durch die Kabeltülle 1 der Figur 1 im Bereich des Befestigungsabschnittes 5 und der Verriegelungsnut 15 dargestellt. Der Nutgrund 15a der Verriegelungsnut 15 an den beiden Seitenwulstabschnitte 5a, 5b weist eine Rechteckform R auf, die in der unteren linken Darstellung der Figur 7 mit den Strichlinien verdeutlicht ist und in der mittleren linken Darstellung der Figur 7 als Einzelheit dargestellt ist.

In der Figur 7 ist in der unteren rechten Darstellung ein Querschnitt durch die Kabeltülle 1 der Figur 6 im Bereich des Befestigungsabschnittes 5 und der Verriegelungsnut 15 im unmontierten Zustand der Kabeltülle 1 dargestellt. Der Nutgrund 15a der Verriegelungsnut 15 an den beiden Seitenwulstabschnitte 5a, 5b weist im unmontierten Zustand der Kabeltülle 1 eine sich nach oben in Richtung zum oberen Wulstabschnitt 5d, in der die schlitzförmige Ausnehmung 30 mit der Öffnungsweite W ausgebildet ist, öffnende Trapezform T auf, die in der unteren rechten Darstellung der Figur 7 mit den Strichlinien verdeutlicht ist und in der mittleren rechten Darstellung der Figur 7 als Einzelheit dargestellt ist.

Wird die Kabeltülle 1 der Figur 6 in eine reckteckförmige, an die Rechteckform R angepasste, Karosserieöffnung 3 montiert, wobei Seitenwände der Karosserieöffnung 3 mit den Nutgründen 15a der Verriegelungsnut 15 an den Seitenwulstabschnitte 5a, 5b in Kontakt gelangen, wird die Trapezform T - wie in der oberen Darstellung der Figur 7 veranschaulicht ist - oben zusammengedrückt und somit die Trapezform T auf die Rechteckform R zusammengedrückt, derart, dass die beiden Abschnitte 5d1 und 5d2 des Wulstabschnittes 5d aufeinandergedrückt werden und dadurch die schlitzförmige Ausnehmung 30 zwischen den beiden Abschnitte 5a1 und 5a2 des Wulstabschnittes 5d geschlossen wird, so dass kein Wasser mehr von dem Nassbereich 10 an der schlitzförmigen Ausnehmung 30 in die Kabeltülle 1 eindringen kann.

## Patentansprüche

1. Kabeltülle (1) zur Durchführung eines elektrischen Verbindungskabels (2) durch eine Karosserieöffnung (3) eines Fahrzeugs, insbesondere einer mobilen Arbeitsmaschine, wobei die Kabeltülle (1) einen Befestigungsabschnitt (5) zum Abdecken, insbesondere wasserabweisenden Abdecken, der als Kabeldurchführung dienenden, einen Nassbereich (10) und einem Trockenbereich (11) des Fahrzeugs miteinander verbindenden Karosserieöffnung (3) aufweist, **dadurch gekennzeichnet, dass** die Kabeltülle (1) einen von dem Befestigungsabschnitt (5) ausgehenden Wannenabschnitt (7) aufweist, wobei sich ein Führungskanal (12) zum Hindurchführen des Verbindungskabels (2) durch den Befestigungsabschnitt (5) und den Wannenabschnitt (7) erstreckt, wobei im montierten Zustand der Kabeltülle (1) der Wannenabschnitt (7) im Trockenbereich (11) des Fahrzeugs angeordnet ist.

2. Kabeltülle nach Anspruch 1, **dadurch gekennzeichnet, dass** der Wannenabschnitt (7) an der Oberseite (7a) offen ausgebildet ist, wobei die Oberseite (7a) des Wannenabschnitts (7) eine trockenraumseitige Öffnung (20) des Führungskanals (12) bildet.

3. Kabeltülle nach Anspruch 1 oder 2, **dadurch gekennzeichnet, dass** an dem Befestigungsabschnitt (5) eine nassraumseitige Öffnung (21) des Führungskanals (12) ausgebildet ist.

4. Kabeltülle nach einem der Ansprüche 2 bis 3, **dadurch gekennzeichnet, dass** die nassraumseitige Öffnung (21) des Führungskanals (12) im Wesentlichen senkrecht zur trockenraumseitigen Öffnung (20) des Führungskanals (12) angeordnet ist.

5. Kabeltülle nach einem der Ansprüche 2 bis 4, **dadurch gekennzeichnet, dass** der Wannenabschnitt (7) ausgehend von der Oberseite (7a) des Wannenabschnitts (7) zu einer Unterseite der nassraumseitigen Öffnung (21) des Führungskanals (12) des Befestigungsabschnitts (5) als Wasserablaufrinne ausgebildet ist, mit einem von der Oberseite (7a) des Wannenabschnitts (7) zu der Unterseite der nassraumseitigen Öffnung (21) des Führungskanals (12) der Befestigungsabschnitts (5) ausgebildete Gefälle.

6. Kabeltülle nach einem der Ansprüche 2 bis 5, **dadurch gekennzeichnet, dass** die nassraumseitige Öffnung (21) des Führungskanals (12), die trockenraumseitige Öffnung (20) des Führungskanals (12) und der durch den Befestigungsabschnitt (5) und den Wannenabschnitt (7) sich erstreckende Führungskanal (12) derart ausgebildet sind, dass im montierten Zustand der Kabeltülle (1) ein mit einem Stecker versehenes elektrisches Verbindungskabel (2) durch die Kabeltülle (1) geschoben werden kann.

7. Kabeltülle nach einem der Ansprüche 3 bis 6, **dadurch gekennzeichnet, dass** der Befestigungsabschnitt (5) an der nassraumseitigen Öffnung (21) des Führungskanals (12) mit mindestens einer die nassraumseitige Öffnung (21) zumindest teilweise abdeckenden flexiblen Abdecklippe (25a; 25b) versehen ist.

8. Kabeltülle nach Anspruch 7, **dadurch gekennzeichnet, dass** sich die flexible Abdecklippe (25a; 25b) von einer Oberseite der nassraumseitigen Öffnung (21) des Führungskanals (12) des Befestigungsanschnitts (5) in Richtung zur Unterseite der nassraumseitigen Öffnung (21) des Führungskanals (12) des Befestigungsabschnitts (5) erstreckt.

9. Kabeltülle nach einem der Ansprüche 1 bis 8, **dadurch gekennzeichnet, dass** der Befestigungsabschnitt (5) mit einer umlaufenden Verriegelungsnut (15) versehen ist, in die im montierten Zustand der Rand der Karosserieöffnung (3) eingreift.

10. Kabeltülle nach einem der Ansprüche 1 bis 9, **dadurch gekennzeichnet, dass** der Befestigungsabschnitt (5) und der Wannenabschnitt (7) einstückig ausgebildet sind.

11. Kabeltülle nach einem der Ansprüche 1 bis 10, **dadurch gekennzeichnet, dass** die Kabeltülle (1) aus flexiblem Kunststoff oder aus Gummi besteht.

12. Kabeltülle nach einem der Ansprüche 1 bis 11, **dadurch gekennzeichnet, dass** der Befestigungsabschnitt (5) mit einer den Befestigungsabschnitt (5) in Umfangsrichtung unterbrechenden schlitzförmigen Ausnehmung (30) versehen ist.

13. Kabeltülle nach Anspruch 12, **dadurch gekennzeichnet, dass** der Wannenabschnitt (7) von zwei Seitenwänden (7b, 7c) und einer Rückwand (7d) gebildet ist und der Befestigungsabschnitt (5) von einem ersten Seitenwulstabschnitt (5a), einem zweiten Seitenwulstabschnitt (5b), einem unteren Wulstabschnitt (5c) und einem oberen Wulstabschnitt (5d) gebildet ist, wobei die erste Seitenwand (7b) des Wannenabschnitts (7) in den ersten Seitenwulstabschnitt (5a) des Befestigungsabschnitts (5) übergeht, die zweite Seitenwand (7c) des Wannenabschnitts (7) in den zweiten Seitenwulstabschnitt (5b) des Befestigungsabschnitts (5) übergeht und die Rückwand (7d) des Wannenabschnitts (7) in den unteren Wulstabschnitt (5c) des Befestigungsabschnitts (5) übergeht, wobei in dem oberen Wulstabschnitt (5d) des Befestigungsabschnitts (5) die schlitzförmige Ausnehmung (30) ausgebildet ist, wobei die schlitzförmigen Ausnehmung (30) den oberen Wulstabschnitt (5d) unterbricht.

14. Kabeltülle nach Anspruch 13, **dadurch gekennzeichnet, dass** die schlitzförmige Ausnehmung (30) in dem oberen Wulstabschnitt (5d) des Befestigungsabschnitts (5) im Wesentlichen mittig zwischen den beiden Seitenwulstabschnitten (5a,5b) des Befestigungsabschnitts (5) angeordnet ist.

15. Kabeltülle nach einem der Ansprüche 12 bis 14, **dadurch gekennzeichnet, dass** die Öffnungsweite (W) der schlitzförmigen Ausnehmung (30) derart ausgeführt ist, dass in einem in der Karosserieöffnung (3) des Fahrzeugs montierten Zustand der Kabeltülle (1) die schlitzförmige Ausnehmung (30) geschlossen ist.

16. Fahrzeug, insbesondere mobile Arbeitsmaschine, mit einer Kabeltülle (1) nach einem der vorangegangenen Ansprüche zur Durchführung eines elektrischen Verbindungskabels (2) von einem Innenraum einer Fahrerkabine zur Fahrzeugaußenseite.
